(19) Europäisches Patentamt
European Patent Office
Office européen des brevets

(11) **EP 4 773 392 A1**

(12) **EUROPEAN PATENT APPLICATION**

(43) Date of publication:
08.07.2026 Bulletin 2026/28

(21) Application number: 25221002.6

(22) Date of filing: 05.12.2025

(51) International Patent Classification (IPC):
*H01M 50/403* (2021.01)    *H01M 50/423* (2021.01)
*H01M 50/446* (2021.01)    *H01M 50/434* (2021.01)

(52) Cooperative Patent Classification (CPC):
H01M 50/403; H01M 50/423; H01M 50/434;
H01M 50/446

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 KR 20240193095

(71) Applicant: SAMSUNG SDI CO., LTD.
Yongin-si, Gyeonggi-do 17084 (KR)

(72) Inventors:
• PARK, Changwon
17084 Yongin-si, Gyeonggi-do (KR)
• PARK, Eunjin
17084 Yongin-si, Gyeonggi-do (KR)

(74) Representative: Michalski Hüttermann & Partner
mbB
Kaistraße 16A
40221 Düsseldorf (DE)

(54) **POROUS SEPARATOR FOR RECHARGEABLE LITHIUM BATTERY, METHOD OF MANUFACTURING THE SAME, AND RECHARGEABLE LITHIUM BATTERY INCLUDING THE SAME**

(57) Disclosed are a porous separator for a rechargeable lithium battery, a method of manufacturing the porous separator, and a rechargeable lithium battery including the porous separator. The porous separator for a rechargeable lithium battery includes a boron nitride nanosheet (BNNS), a boron nitride nanotube (BNNT), and a polymer that is or includes polyimide (PI), aramid, or a combination thereof.

【FIG. 1】

## Description

## BACKGROUND

### 1. Field

A porous separator for a rechargeable lithium battery, a method of manufacturing the porous separator, and a rechargeable lithium battery including the porous separator are disclosed.

### 2. Description of the Related Art

A rechargeable lithium battery may be recharged and has, e.g., three or more times as high an energy density per unit weight as a conventional lead storage battery, nickel-cadmium battery, nickel hydrogen battery, nickel zinc battery and the like. The rechargeable lithium battery may also be charged at a high rate and is commercially manufactured for, e.g., a laptop, a cell phone, an electric tool, an electric bike, and the like. Increasing the energy density of a rechargeable lithium battery may thus be advantageous.

A rechargeable lithium battery is typically manufactured by injecting an electrolyte solution into an electrode assembly, which includes a positive electrode including a positive electrode active material capable of intercalating/-deintercalating lithium ions and a negative electrode including a negative electrode active material capable of intercalating/deintercalating lithium ions.

Between the positive electrode and the negative electrode, a separator is generally interposed, and the separator includes a ceramic layer coated on one surface, or on both surfaces, of a porous substrate.

The ceramic layer has advantages of compensating for insufficient heat resistance and mechanical strength of the polymer fabric panel, but disadvantages of increasing a thickness of the separator and of the rechargeable lithium battery including the separator, and inefficiently dissipating heat generated during operation of the rechargeable lithium battery.

## SUMMARY

Some example embodiments include a porous separator for a rechargeable lithium battery that has desired or improved adhesive strength to an electrode while improving the mechanical strength and thermal stability of the separator.

Some example embodiments include a porous separator for a rechargeable lithium battery, including a boron nitride nanosheet (BNNS); a boron nitride nanotube (BNNT); and a polymer that is or includes polyimide (PI), aramid, or a combination thereof.

Some example embodiments include a rechargeable lithium battery including the porous separator of the above example embodiments.

A porous separator according to some example embodiments may exhibit desired or improved adhesive strength to an electrode while improving the mechanical strength and thermal stability of the separator.

Accordingly, by using the porous separator of some example embodiments, heat generated during operation of a rechargeable lithium battery may be efficiently dissipated even while having a thin thickness, and the adhesive strength thereof to the electrode may be maintained even during long-term charging and discharging of the rechargeable lithium battery.

## BRIEF DESCRIPTION OF THE DRAWINGS

FIGS. 1 to 4 are schematic views illustrating rechargeable lithium batteries according to some example embodiments.
FIG. 5 is a flowchart illustrating a method of manufacturing a porous separator for a rechargeable lithium battery, according to an example embodiment.

## DETAILED DESCRIPTION

Hereinafter, example embodiments of the present disclosure are described in detail. However, these embodiments are examples, the present disclosure is not limited thereto and the present disclosure is defined by the scope of claims.

As used herein, when a specific definition is not otherwise provided, it is understood that when an element such as a layer, film, region, or substrate is referred to as being "on" another element, the element can be directly on the other element, or intervening elements may also be present therebetween.

As used herein, when a specific definition is not otherwise provided, the singular may also include the plural. In addition, unless otherwise specified, "A or B" may mean "including A, including B, or including A and B."

As used herein, "a combination thereof" may mean a mixture, a stack, a composite, a copolymer, an alloy, a blend, or a reaction product of constituents.

**Porous Separator:**

Some example embodiments include a porous separator for a rechargeable lithium battery including a boron nitride nanosheet (BNNS), a boron nitride nanotube (BNNT), and a polymer that is or includes polyimide (PI), aramid, or a combination thereof.

(1) A porous separator of some example embodiments includes two types of boron nitrides.

The boron nitride is a compound that exhibits desired or improved heat resistance, heat dissipation, and insulation properties, and depending on the form thereof, specific functions thereof can be relatively specialized.

For example, the boron nitride nanosheet has desired or improved mechanical strength as a sheet shape with closed pores, and the boron nitride nanotube has desired or improved lithium ionic conductivity as a tube shape including tube-shaped pores opening from the top and bottom.

(2) The porous separator of one example embodiment includes a polymer such as or including at least one of polyimide (PI), aramid, or a combination thereof.

The polymer may exhibit desired or improved heat resistance while constituting a binder that bonds the two types of boron nitride to each other, or to bond them to an electrode.

(3) The porous separator of some example embodiments is 'porous' as the separator has a structure that includes pores between the constituent components that make up the porous separator. Accordingly, even when the boron nitride nanosheet in the form of a sheet with blocked pores is included, thermal shrinkage may be reduced or suppressed while the electrolyte solution is appropriately impregnated into the porous separator.

(4) Accordingly, the porous separator according to some example embodiments may exhibit desired or improved adhesive strength to an electrode while improving the mechanical strength and thermal stability of the separator.

Accordingly, by using the porous separator of some example embodiments, heat generated during operation of a rechargeable lithium battery may be efficiently dissipated even when the rechargeable lithium battery has a thin thickness, and adhesive strength to the electrode may be maintained even during long-term charging and discharging of the rechargeable lithium battery.

Hereinafter, a separator according to some example embodiments is described in more detail.

Boron Nitride Nanosheet

The boron nitride nanosheet may have a thickness in a range of about 1 nm to about 100 nm, about 1 nm to about 50 nm, or about 1 nm to about 10 nm; and each horizontal and vertical length of about 1 nm to about 1000 nm, about 1 nm to about 500 nm, or about 1 nm to about 100 nm.

The boron nitride nanosheet (BNNS) form, compared with the boron nitride nanotube (BNNT) form, is advantageous in terms of mechanical strength, but when used alone, may be disadvantageous in terms of porosity.

Boron Nitride Nanotube

The boron nitride nanotube may have a diameter in a range of about 10 nm to about 100 nm, about 20 nm to about 80 nm, or about 30 nm to about 50 nm; and a length in a range of about 1 nm to about 100 $\mu$m, about 5 nm to about 80 $\mu$m, or about 10 nm to about 50 $\mu$m.

The boron nitride nanotube (BNNT) form, compared with the boron nitride nanosheet (BNNS) form, is advantageous in terms of porosity, but when used alone, may be disadvantageous in terms of mechanical strength.

The boron nitride nanosheet may be included in an amount in a range of about 10 wt% to about 60 wt%, about 20 wt% to about 60 wt%, or about 30 wt% to 60 wt%; and the boron nitride nanotube may be included in an amount in a range of about 10 wt% to about 60 wt%, about 20 wt% to about 60 wt%, or about 30 wt% to about 60 wt% based on a total amount 100 wt% of the porous separator.

For example, based on a total amount 100 wt% of the porous separator, a sum amount of the boron nitride nanosheet and boron nitride nanotube may be included in a range of about 10 wt% to about 60 wt%, about 20 wt% to about 60 wt%, or about 30 wt% to about 60 wt%.

In addition, a weight ratio of the boron nitride nanosheet to the boron nitride nanotube may be in a range of about 1:9 to about 9:1, about 2:8 to about 8:2, about 3:7 to about 7:3, or about 4:6 to about 6:4.

When the above ranges are satisfied, a synergistic effect of mutual functions of the boron nitride nanosheet and the boron nitride nanotube may be achieved.

Polymer

The porous separator may include a polymer such as polyimide (PI), aramid, or a combination thereof, which may constitute a binder and a heat-resistant additive.

A weight ratio of the polymer to (boron nitride nanosheets + boron nitride nanotubes) may be in a range of about 90:10 to about 40:60, about 80:20 to about 40:60, or about 70:30 to about 40:60.

Additionally, based on a total amount 100 wt% of the porous separator, the polymer may be included in an amount in a range of about 90 wt% to about 40 wt%, about 80 wt% to about 40 wt%, or about 70 wt% to about 40 wt%.

When the above ranges are satisfied, the adhesion between the components of the coating layer and the adhesion thereof to the electrode may be strengthened, while the heat resistance of the porous separator may be improved.

Porosity of Porous Separator

The porosity of the porous separator may be in a range of about 10 volume% to about 60 volume%, about 20 volume% to about 60 volume%, or about 30 volume% to about 60 volume% based on a total volume 100 volume% of the porous separator.

When the porosity is within an appropriate range, the electrolyte solution may be appropriately impregnated into the porous separator while reducing or suppressing thermal shrinkage.

For reference, the porosity of the porous separator may be obtained by substituting volume density ($\rho$) and true density ($\rho c$) into Equation 1 below.

<div align="center">

Equation 1:

$$\text{Porosity }(P) = 1 - \rho/\rho c (\%).$$

</div>

In Equation 1, the volume density ($\rho$) is calculated from a weight and a volume of the porous separator, and the true density ($\rho c$) may be obtained from a theoretical density and a composition ratio of each material.

In addition, a pore distribution of the porous separator may be measured by using a capillary flow porometer (a permeability measuring device, Manufacturer: PMI (Porous Material Inc.)) within a pressure range of about 0 PSI to about 500 PSI.

Structure and Thickness of Porous Separator

The porous separator is a freestanding separator, and may not include a separate substrate.

Additionally, the thickness of the porous separator may be in a range of about 5 $\mu$m to about 20 $\mu$m, about 10 $\mu$m to about 20 $\mu$m, or about 10 $\mu$m to about 15 $\mu$m.

The porous separator has a thin thickness, and may exhibit improved functions compared to commonly known separators without a separate substrate.

**Method for Manufacturing Porous Separator:**

Some example embodiments include a method for manufacturing a porous separator for a rechargeable lithium battery, the method including preparing a raw material mixed solution including a boron nitride nanosheet (BNNS); a boron nitride nanotube (BNNT); a polymer such as or including at least one of polyimide (PI), aramid, or a combination thereof; a pore-forming agent; and a solvent; drying the raw material mixed solution to obtain a dried product from which the solvent has volatilized; and heat-treating the dried product.

Based on the above, the porous separator of the aforementioned embodiment may be obtained economically.

Hereinafter, a method for manufacturing a porous separator of some example embodiments is described in detail, excluding duplicate descriptions.

Raw Materials

Based on a total amount 100 wt% of the boron nitride nanosheet + boron nitride nanotube + polymer, the boron nitride nanosheet may be included in an amount in a range of about 10 wt% to about 60 wt%, about 20 wt% to about 60 wt%, or about 30 wt% to about 60 wt%; and the boron nitride nanotube may be included in an amount in a range of about 10 wt% to about 60 wt%, about 20 wt% to about 60 wt%, or about 30 wt% to about 60 wt%.

For example, based on a total amount 100 wt% of the porous separator, a sum of the amount of the boron nitride nanosheet and boron nitride nanotube may be included in a range of about 10 wt% to about 60 wt%, about 20 wt% to about 60 wt%, or about 30 wt% to about 60 wt%.

A weight ratio of the boron nitride nanosheet to the boron nitride nanotube may be in a range of about 1:9 to about 9:1, about 2:8 to about 8:2, about 3:7 to about 7:3, or about 4:6 to about 6:4.

The weight ratio of the polymer to (boron nitride nanosheet + boron nitride nanotube) may be in a range of about 90:10 to about 50:50, about 80:20 to about 50:50, or about 70:30 to about 50:50.

When the above ranges are satisfied, the composition of the final material described above may be satisfied.

Pore-forming Agent

The pore-forming agent may be or include glycerol, which may form pores in the porous separator formed by the raw materials.

The pore-forming agent may be used in an amount in a range of about 10 parts by weight to about 100 parts by weight, about 30 parts by weight to about 100 parts by weight, or about 50 parts by weight to about 100 parts by weight, based on 100 parts by weight of the total amount of the polymer.

Within this range, the porosity and pore size of the porous separator may be appropriately controlled.

Solvent

The solvent may be or include at least one of N,N-dimethyl acetamide (DMAC), dimethylformamide (DMF), 1-methyl-2-pyrrolidinone (NMP), or a combination thereof.

The solvent may be included in an amount in a range of about 60 wt% to about 90 wt%, about 70 wt% to about 90 wt%, or about 80 wt% to about 90 wt% based on a total amount 100 wt% of the raw material mixture solution.

In this range, the solids may be properly or sufficiently dispersed without clumping.

Drying Process

When the above raw material mixture solution is dried, after the solvent has evaporated, a dried product in which the boron nitride nanosheet, the boron nitride nanotube, and the polymer are evenly, or substantially evenly, dispersed may be obtained.

The drying may be performed at a temperature range of about 70 °C to about 130 °C, about 90 °C to about 130 °C, or about 110 °C to about 130 °C; for a duration in a range of about 1 hour to about 12 hours, about 5 hours to about 12 hours, or about 8 hours to about 12 hours.

In this range, the raw materials are not decomposed, and only the solvent may be volatilized.

Heat-treating Process

When using a polyamic acid polymer, the heat treatment process may convert polyamic acid polymer into polyimide through imidization, thereby improving the properties of the porous separator formed.

The heat-treating may be performed at a temperature range of about 300 °C to about 400 °C, or about 350 °C to about 400 °C; for a duration in a range of about 1 hour to about 5 hours, or about 3 hours to about 5 hours.

**Rechargeable Lithium Battery:**

Some example embodiments include a rechargeable lithium battery, including a positive electrode, a negative electrode, and a separator between the positive electrode and the negative electrode, wherein the separator is the separator of the aforementioned example embodiments.

Hereinafter, a rechargeable lithium battery of some example embodiments is described in detail, excluding duplicate descriptions.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: $Li_{a1}Ni_{x1}M^1_{y1}M^2_{z1}O_{2-b1}X_{b1}$

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently is or includes at least one or more of Al, B, Ba, Ca, Ce, Co, Cr, Cu, Fe, Mg, Mn, Mo, Nb, Si, Sn, Sr, Ti, V, W, and Zr, and X is or includes at least one or more of F, P, and S.

In Chemical Formula 11, $0.6 \leq x1 \leq 1$, $0 \leq y1 \leq 0.4$, and $0 \leq z1 \leq 0.4$, or $0.8 < x1 < 1$, $0 \leq y1 \leq 0.2$, and $0 \leq z1 \leq 0.2$.

Chemical Formula 12: $Li_{a2}Co_{x2}M^3_{y2}O_{2-b2}X_{b2}$

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes at least one or more of Al, B, Ba, Ca, Ce, Cr, Cu, Fe, Mg, Mn, Mo, Ni, Se, Si, Sn, Sr, Ti, V, W, Y, Zn, and Zr, and X is or includes at least one or more of F, P, and S.

Chemical Formula 13: $Li_{a3}Fe_{x3}M^4_{y3}PO_{4-b3}X_{b3}$

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes at least one or more of Al, B, Ba, Ca, Ce, Co, Cr, Cu, Mg, Mn, Mo, Ni, Se, Si, Sn, Sr, Ti, V, W, Y, Zn, and Zr, and X is or includes at least one or more of F, P, and S.

Chemical Formula 14: $Li_{a4}Ni_{x4}Mn_{y4}M^5_{z4}O_{2-b4}X_{b4}.$

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes at least one or more of Al, B, Ba, Ca, Ce, Cr, Fe, Mg, Mo, Nb, Si, Sn, Sr, Ti, V, W, and Zr, and X is or includes at least one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity and can be applicable to high-capacity, high-density rechargeable lithium batteries.

Positive Electrode

The positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can constitute a sacrificial positive electrode.

A content of the positive electrode active material may be in a range of about 90 wt% to about 99.5 wt% based on 100 wt% of the positive electrode active material layer, and each content of the binder and the conductive material may be in a range of about 0.5 wt% to about 5 wt% based on 100 wt% of the positive electrode active material layer.

The binder may improve binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material unless the electrically conductive material causes a chemical change. Examples of the conductive material may include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ $(0 < x \leq 2)$, a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

Negative Electrode

A negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder adheres the negative electrode active material particles to each other, and adheres the negative electrode active material to the current collector. The binder may be or include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte solution may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$,

LiCl, Lil, LiN(SO$_3$C$_2$F$_5$)$_2$, Li(FSO$_2$)$_2$N (lithium bis(fluorosulfonyl)imide, LiFSI), LiC$_4$F$_9$SO$_3$, LiN(C$_x$F$_{2x+1}$SO$_2$)(C$_y$F$_{2y+1}$SO$_2$) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

Rechargeable Lithium Battery

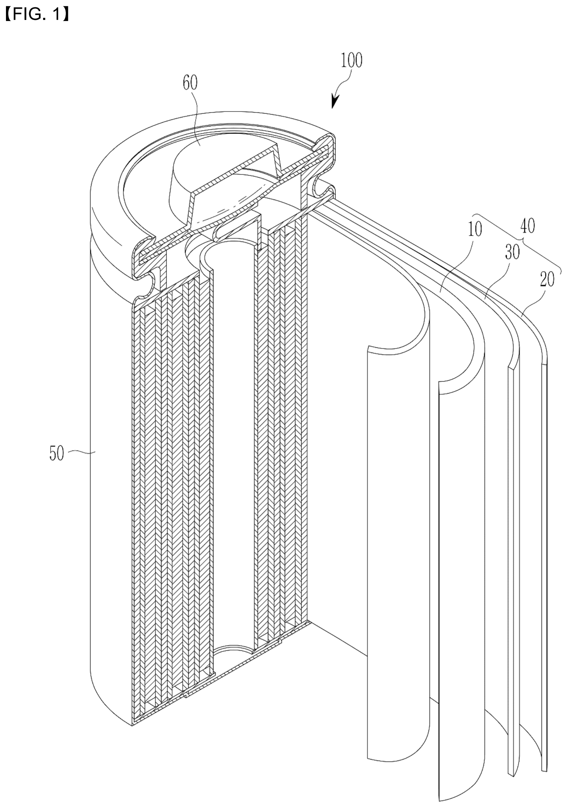

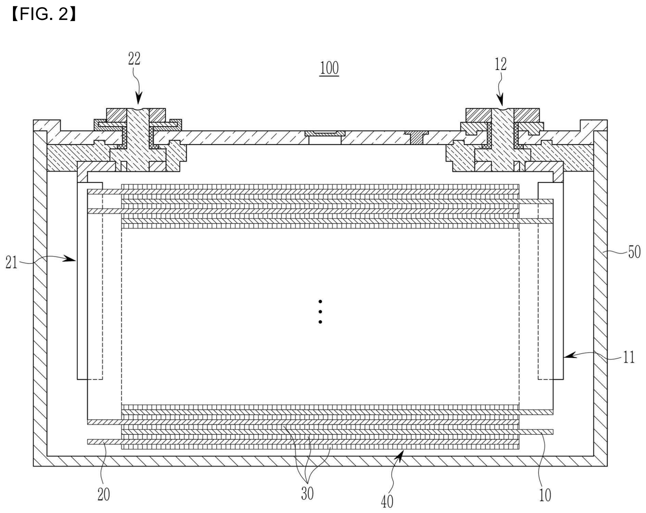

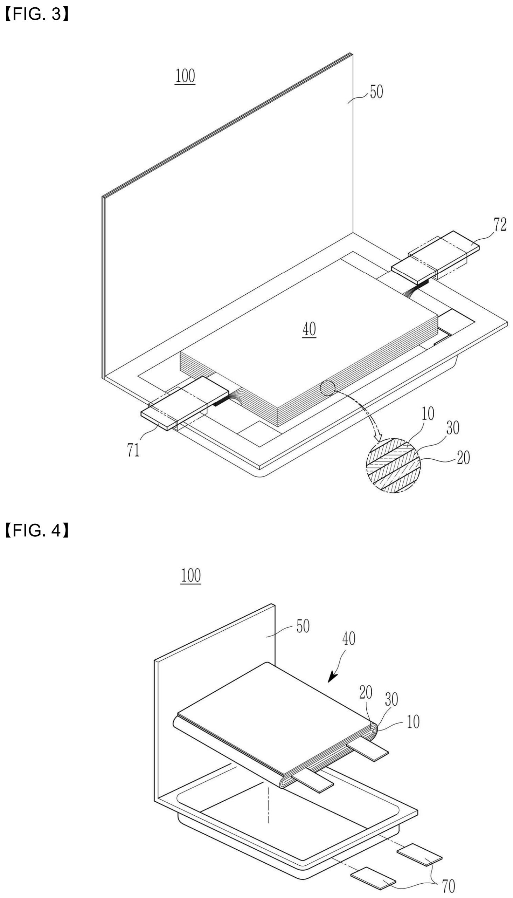

The rechargeable lithium battery may be classified into cylindrical, prismatic, pouch, or coin-type batteries, and the like depending on its shape. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

FIG. 5 is a flowchart illustrating a method of manufacturing a porous separator for a rechargeable lithium battery, according to an example embodiment. In examples, the method 500 includes operation 510, which includes preparing a raw material mixed solution including a boron nitride nanosheet (BNNS), a boron nitride nanotube (BNNT), a polymer including at least one of polyimide (PI), aramid, and a combination thereof, a pore-forming agent, and a solvent.

For example, the pore-forming agent includes glycerol. In another example, the pore-forming agent is included in an amount in a range of about 10 parts by weight to about 100 parts by weight based on 100 parts by weight of the total amount of the boron nitride nanosheet + boron nitride nanotube + polymer. In further examples, the solvent includes at least one of N,N-dimethyl acetamide (DMAC), dimethylformamide (DMF), 1-methyl-2-pyrrolidinone (NMP), and a combination thereof. In yet another example, the solvent is included in an amount in a range of about 60 wt% to about 90 wt% based on a total amount 100 wt% of the raw material mixture solution.

Operation 520 includes drying the raw material mixed solution to obtain a dried product from which the solvent has volatilized. Operation 530 includes heat-treating the dried product. In an example, the drying is performed at a temperature range of about 70 °C to about 130 °C for a duration in a range of about 1 hour to about 12 hours, and the heat-treating is performed at a temperature range of about 300 °C to about 500 °C for a duration in a range of about 1 hour to about 5 hours.

Examples and comparative examples of the present disclosure are described below. However, the following are only examples of the present disclosure, and the present disclosure is not limited to the following examples.

**Example 1**

(1) Manufacturing of Separator

A boron nitride nanosheet (width*length*thickness = about 200 nm*120 nm*10 nm) and a boron nitride nanotube (diameter*length = 40 nm*10 $\mu$m) were mixed in a weight ratio of 5:5 to prepare a boron nitride mixture.

The boron nitride mixture and polyamic acid (AA) were mixed in a weight ratio of 30:70. Based on 100 parts by weight of the polyamic acid, 30 parts by weight of a glycerol pore-forming agent was added, and 90 wt% of a DMAc solvent was added based on 100 wt% of an entire raw material mixed solution, preparing the raw material mixed solution.

The raw material mixed solution was mounted on an electrospray device (Equipment name: Electrospinning Machine, Manufacturer: NanoNC), sprayed onto a polyethylene glass substrate under conditions of a voltage: 15 kV, a flow rate: 0.7 ml/h, and TCD: 15 cm, dried at 80 °C for 10 hours, and heat-treated at 400 °C for 1 hour. In the heat treatment process, the polyamic acid was converted to polyimide.

Finally, a film formed on the glass substrate was peeled off to obtain a porous separator (a thickness: 10 $\mu$m).

(2) Manufacturing of Rechargeable Lithium Battery Cell

Artificial graphite was used as a negative electrode active material, and the negative electrode active material: styrene-butadiene rubber binder: carboxylmethyl cellulose were mixed in a weight ratio of 97:1:2, and then dispersed in distilled water to prepare a negative electrode active material slurry. The negative electrode active material slurry was coated on both surfaces of a 10 $\mu$m-thick Cu foil and then, dried at 100 °C and pressed to manufacture a negative electrode.

A positive electrode slurry was prepared by mixing $LiNi_{0.91}Co_{0.05}Al_{0.04}O_2$ as a positive electrode active material, polyvinylidene fluoride (PVDF) as a binder, and carbon as a conductive agent in a weight ratio of 92:4:4, and then dispersing the mixture into N-methyl-2-pyrrolidone. The positive electrode active material slurry was coated on both surfaces of a 10 $\mu$m-thick aluminum foil, and then dried and compressed to manufacture a positive electrode.

An electrolyte solution was prepared by mixing 1.5 M lithium salt ($LiPF_6$) with a carbonate solvent including ethylene carbonate (EC): ethyl methyl carbonate (EMC): dimethyl carbonate (DMC) mixed in a volume ratio of 20:40:40.

The separator was assembled with the positive and negative electrodes to manufacture an electrode assembly, which was inserted into a prismatic case, and the electrolyte solution was injected into the case, manufacturing a rechargeable lithium battery cell.

**Example 2**

A separator and a rechargeable lithium battery cell according to Example 2 were manufactured in the same manner as in Example 1, with a difference that the weight ratio of the boron nitride nanosheet to the boron nitride nanotube was changed to 60:40.

**Example 3**

A separator and a rechargeable lithium battery cell according to Example 3 were manufactured in the same manner as in Example 1, with a difference that the weight ratio of the boron nitride nanosheet to the boron nitride nanotube was changed to 40:60.

**Example 4**

A separator and a rechargeable lithium battery cell according to Example 4 were manufactured in the same manner as in Example 1, with a difference that 50 parts by weight of the glycerol pore-forming agent was used based on 100 parts by weight of the polyamic acid in preparing the raw material mixed solution.

**Example 5**

A separator and a rechargeable lithium battery cell according to Example 5 were manufactured in the same manner as in Example 1, with a difference that the weight ratio of the polyamic acid to the boron nitride mixture was changed to 50:50.

**Example 6**

A separator and a rechargeable lithium battery cell according to Example 6 were manufactured in the same manner as in Example 1, with a difference that 50 parts by weight of the glycerol pore-forming agent was used based on 100 parts by weight of the polyamic acid in preparing the raw material mixed solution.

**Comparative Example 1 (Ref.)**

A rechargeable lithium battery cell according to Comparative Example 1 was manufactured in the same manner as in Example 1, with a difference that the polyethylene porous substrate (a thickness: 18 $\mu$m) was used as a separator.

**Comparative Example 2**

A rechargeable lithium battery cell according to Comparative Example 2 was manufactured in the same manner as in Example 1, with a difference that a separator including a coating layer (a thickness: 2 $\mu$m) including aluminum hydrate (D50: $\mu$m) and a PVDF binder in a weight ratio of 70:30 on the polyethylene porous substrate (a thickness: 16 $\mu$m) was used.

**Comparative Example 3**

A separator and a rechargeable lithium battery cell according to Comparative Example 3 were manufactured in the same manner as in Example 1, with a difference that the glycerol pore-forming agent was not used.

**Comparative Example 4**

A separator and a rechargeable lithium battery cell according to Comparative Example 4 were manufactured in the same manner as in Example 1, with a difference that the boron nitride nanosheet was not used.

**Comparative Example 5**

A separator and a rechargeable lithium battery cell according to Comparative Example 5 were manufactured in the same manner as in Example 1, with a difference that the boron nitride nanotube was not used.

The separators of the examples and the comparative examples are summarized in Tables 1 and 2 below.

Table 1:

|  | Examp le 1 | Examp le 2 | Examp le 3 | Examp le 4 | Examp le 5 | Examp le 6 |
|---|---|---|---|---|---|---|
| Polymer : BN | 70:30 | 70:30 | 70:30 | 70:30 | 50:50 | 50:50 |
| BNNS : BNNT | 50:50 | 60:40 | 40:60 | 50:50 | 50:50 | 50:50 |
| Glycerol* | 30 | 30 | 30 | 50 | 30 | 50 |
| * Glycerol: parts by weight based on 100 weight parts of the polymer | | | | | | |

Table 2:

|  | Comparati ve Example 1 | Comparati ve Example 2 | Comparati ve Example 3 | Comparati ve Example 4 | Comparati ve Example 5 |
|---|---|---|---|---|---|
| Polymer : BN | - | - | 70:30 | 70:30 | 70:30 |
| BNNS : BNNT | - | - | 50:50 | 0:100 | 100:0 |
| Glycerol* | - | - | 0 | 30 | 30 |
| * Glycerol : parts by weight based on 100 weight parts of the polymer | | | | | |

**Evaluation Example** 1: **Evaluation of Separator**

For each separator of Examples and Comparative Examples, the evaluation was performed using the following method, and the results are shown in Tables 3 and 4 below.
(1) Puncture strength: The permeability was measured using a KES-G5 device from KATO Tech according to a conventional method known in the art.
(2) Air permeability: Air permeability was measured using an EGO1-55-1MR device from Asahi Seiko according to a conventional method known in the art.
(3) Heat Shrinkage: The separators were cut into a size of a width*a length = 5 cm*5 cm to prepare samples. Each of the samples was inserted into an aluminum pouch, and the same electrolyte solution as in Example 1 was injected thereinto and then, allowed to stand at 150 °C in an oven for 1 hour to calculate a heat shrinkage rate according to Equation 1.

Equation 1:

$$\text{Heat shrinkage rate} = (L_0 - L_1)/L_0 \times 100.$$

$L_0$ is an initial length of the sample and $L_1$ is a length of the sample after leaving it at 150 °C for 1 hour.
(4) Wettability: The separators were respectively cut into a size of width*length=5 cm*5 cm to prepare samples, which were placed in 10 ml of the same electrolyte solution as in Example 1 and then, allowed to stand for 1 minute to measure their weights.

Table 3:

|  | Examp le 1 | Examp le 2 | Examp le 3 | Examp le 4 | Examp le 5 | Examp le 6 |
|---|---|---|---|---|---|---|
| Puncture strength | 604 | 638 | 583 | 562 | 587 | 522 |

(continued)

|  | Example 1 | Example 2 | Example 3 | Example 4 | Example 5 | Example 6 |
|---|---|---|---|---|---|---|
| Air permeability (s/100 cc) | 132 | 159 | 117 | 98 | 124 | 108 |
| Heat shrinkage (%) @150 °C, 1 hr | 0 | 0 | 0 | 0 | 0 | 0 |
| Wettability (g) | 0.049 | 0.044 | 0.057 | 0.053 | 0.050 | 0.062 |

Table 4:

|  | Comparative Example 1 | Comparative Example 2 | Comparative Example 3 | Comparative Example 4 | Comparative Example 5 |
|---|---|---|---|---|---|
| Puncture strength | 351 | 624 | 657 | 391 | 674 |
| Air permeability (s/100 cc) | 156 | 187 | >20000 | 78 | 258 |
| Heat shrinkage (%) @150 °C, 1 hr | >50 | 42 | - | 6 | 0 |
| Wettability (g) | 0.021 | 0.043 | 0.012 | 0.069 | 0.041 |

Referring to Tables 3 and 4, compared with Comparative Examples 1 to 5, Examples 1 to 6, in which electrolyte solution impregnation/immersion characteristics as well as mechanical strength and thermal stability of the separators were improved, may be expected to achieve formation efficiency of the rechargeable lithium battery cells and stability during the battery operation.

Accordingly, when the electrode of some example embodiments, which are represented by Examples 1 to 6, is used, heat generated during the operation of the rechargeable lithium battery cells may not only be efficiently dissipated, but adhesion to the electrode also may be maintained even during the long-term charging and discharging of the rechargeable lithium battery cells.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A porous separator for a rechargeable lithium battery, the porous separator comprising:

a boron nitride nanosheet (BNNS);
a boron nitride nanotube (BNNT); and
a polymer comprising at least one of polyimide (PI), aramid, and a combination thereof.

2. The porous separator as claimed in claim 1, wherein the boron nitride nanosheet has:

a thickness in a range of about 1 nm to about 100 nm, and
at least one of a horizontal length and a vertical length in a range of about 1 nm to about 1000 nm.

3. The porous separator as claimed in claim 1, wherein the boron nitride nanotube has:

a diameter in a range of about 10 nm to about 100 nm, and
a length in a range of about 1 $\mu$m to about 100 $\mu$m.

4. The porous separator as claimed in claim 1, wherein a weight ratio of the boron nitride nanosheet to the boron nitride nanotube is in a range of about 1:9 to about 9:1.

5. The porous separator as claimed in claim 1, wherein a weight ratio of the polymer to (boron nitride nanosheet + the boron nitride nanotube) is in a range of about 90:10 to about 40:60.

6. The porous separator as claimed in claim 1, wherein the porous separator comprises, based on a total amount 100 wt% of the porous separator:

about 10 wt% to about 60 wt% of the boron nitride nanosheet;
about 10 wt% to about 60 wt% of the boron nitride nanotube; and
about 40 wt% to about 90 wt% of the polymer.

7. The porous separator as claimed in claim 1, wherein the porous separator has a thickness in a range of about 6 $\mu$m to about 16 $\mu$m.

8. The porous separator as claimed in claim 1, wherein the porous separator is a freestanding separator that does not comprise a separate substrate.

9. A method for manufacturing a porous separator for a rechargeable lithium battery, the method comprising:

preparing a raw material mixed solution comprising a boron nitride nanosheet (BNNS); a boron nitride nanotube (BNNT); a polymer comprising at least one of polyimide (PI), aramid, and a combination thereof; a pore-forming agent; and a solvent,
drying the raw material mixed solution to obtain a dried product from which the solvent has volatilized, and heat-treating the dried product.

10. The method as claimed in claim 9, wherein the pore-forming agent comprises glycerol.

11. The method as claimed in claim 9, wherein the pore-forming agent is included in an amount in a range of about 10 parts by weight to about 100 parts by weight based on 100 parts by weight of the total amount of the boron nitride nanosheet + boron nitride nanotube + polymer.

12. The method as claimed in claim 9, wherein the solvent comprises at least one of N,N-dimethyl acetamide (DMAC), dimethylformamide (DMF), 1-methyl-2-pyrrolidinone (NMP), and a combination thereof.

13. The method as claimed in claim 9, wherein the solvent is included in an amount in a range of about 60 wt% to about 90 wt% based on a total amount 100 wt% of the raw material mixture solution.

14. The method as claimed in claim 9, wherein:

the drying is performed at a temperature range of about 70 °C to about 130 °C for a duration in a range of about 1 hour to about 12 hours, and
the heat-treating is performed at a temperature range of about 300 °C to about 500 °C for a duration in a range of about 1 hour to about 5 hours.

15. A rechargeable lithium battery, comprising

a positive electrode;
a negative electrode; and
the porous separator as claimed in claim 1 between the positive electrode and the negative electrode.

【FIG. 1】

【FIG. 2】

【FIG. 3】

【FIG. 4】

## EUROPEAN SEARCH REPORT

Europäisches
Patentamt
European
Patent Office
Office européen
des brevets

**Application Number**

**EP 25 22 1002**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/166108 A1 (KIM JAEWOO [KR] ET AL) 26 May 2022 (2022-05-26) <br> * paragraph [0002] * <br> * claim 3 * <br> * claim 6 * <br> * paragraph [0056] * <br> * claims 12,20 * | 1-15 | INV. <br> H01M50/403 <br> H01M50/423 <br> H01M50/446 <br> H01M50/434 |
| Y | US 2022/243036 A1 (HERSAM MARK C [US] ET AL) 4 August 2022 (2022-08-04) <br> * paragraph [0005]; claims 1,8 * <br> * claim 32 * <br> * paragraph [0066] * <br> * paragraph [0096] - paragraph [0110]; examples 1-4 * <br> * claim 12 * | 1-8 | |
| Y | DE MORAES ANA C. M. ET AL: "Phase-Inversion Polymer Composite Separators Based on Hexagonal Boron Nitride Nanosheets for High-Temperature Lithium-Ion Batteries", ACS APPLIED MATERIALS & INTERFACES, [Online] vol. 12, no. 7, 23 January 2020 (2020-01-23), pages 8107-8114, XP055810130, United States ISSN: 1944-8244, DOI: 10.1021/acsami.9b18134 Retrieved from the Internet: URL:https://pubs.acs.org/doi/pdf/10.1021/acsami.9b18134> [retrieved on 2026-03-06] | 9-15 | |
| A | * hBN Nanosheet Composite Separator Fabrication; page 8108, column 2, paragraph 3 * | 8 | |

TECHNICAL FIELDS SEARCHED (IPC)

H01M

The present search report has been drawn up for all claims

| Place of search | Date of completion of the search | Examiner |
|---|---|---|
| The Hague | 25 March 2026 | Moussa, Chantal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 1002

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2026

| Patent document cited in search report | Publication date | Patent family member(s) | | Publication date |
|---|---|---|---|---|
| US 2022166108 A1 | 26-05-2022 | KR 20220072679 A | | 02-06-2022 |
| | | US 2022166108 A1 | | 26-05-2022 |
| US 2022243036 A1 | 04-08-2022 | US 2022243036 A1 | | 04-08-2022 |
| | | WO 2021045850 A2 | | 11-03-2021 |

EPO FORM P0459

For more details about this annex : see Official Journal of the European Patent Office, No. 12/82